(19) Europäisches Patentamt
European Patent Office
Office européen des brevets

(11) EP 3 178 858 A1

(12) EUROPÄISCHE PATENTANMELDUNG

(43) Veröffentlichungstag:
**14.06.2017 Patentblatt 2017/24**

(21) Anmeldenummer: **15198730.2**

(22) Anmeldetag: **09.12.2015**

(51) Int Cl.:
*C08G 18/48* (2006.01) *C08G 18/76* (2006.01)
*C08G 64/18* (2006.01) *C08G 64/34* (2006.01)
*C08G 18/16* (2006.01) *C08G 18/18* (2006.01)
*C08G 65/26* (2006.01) *C08G 18/24* (2006.01)
*C08G 18/40* (2006.01) *C08G 18/44* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder:
- **Klesczewski, Bert**
  **51069 Köln (DE)**
- **Hofmann, Jörg**
  **47800 Krefeld (DE)**
- **Welsch, Nicole**
  **51067 Köln (DE)**
- **Nefzger, Hartmut**
  **50259 Pulheim (DE)**

(74) Vertreter: **Levpat**
**c/o Covestro AG**
**Gebäude 4825**
**51365 Leverkusen (DE)**

(54) **POLYURETHANSCHAUMSTOFFE BASIEREND AUF POLYETHERCARBONATPOLYOLEN**

(57) Die vorliegende Erfindung betrifft ein Verfahren zur Herstellung von Polyurethanschaumstoffen durch Umsetzung von
Komponente A enthaltend Polyethercarbonatpolyol mit einer Hydroxylzahl gemäß DIN 53240 von ≥ 20 mg KOH/g bis ≤ 120 mg KOH/g (Komponente A1),
B2 mindestens ein Zinn(II)-Salz von Carbonsäuren, wobei die Carbonsäure von 10 bis 24 Kohlenstoffatome aufweist, und
C Wasser und/oder physikalischen Treibmitteln,
mit
D Di und/oder Polyisocyanaten,
wobei die Herstellung bei einer Kennzahl von ≥ 90 bis ≤ 120 erfolgt.

Die Erfindung betrifft weiterhin durch das erfindungsgemäße Verfahren hergestellte Polyurethanschaumstoffe und deren Verwendung.

EP 3 178 858 A1

## Beschreibung

Die vorliegende Erfindung betrifft ein Verfahren zur Herstellung von Polyurethanschaumstoffen, vorzugsweise von Polyurethanweichschaumstoffen, durch Reaktion einer Isocyanat-Komponente mit einer gegenüber Isocyanaten reaktiven Komponente, die mindestens ein Polyethercarbonatpolyol umfasst, wobei die resultierenden Polyurethanschaumstoffe niedrige Emissionswerte an cyclischem Propylencarbonat aufweisen. Die Erfindung betrifft weiterhin durch das erfindungsgemäße Verfahren hergestellte Polyurethanschaumstoffe und deren Verwendung.

Im Rahmen einer umweltfreundlichen Ausrichtung von Produktionsprozessen ist es generell wünschenswert, $CO_2$-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im folgenden auch als cPC bezeichnet, oder für R = H Ethylencarbonat, im folgenden auch als cEC bezeichnet).

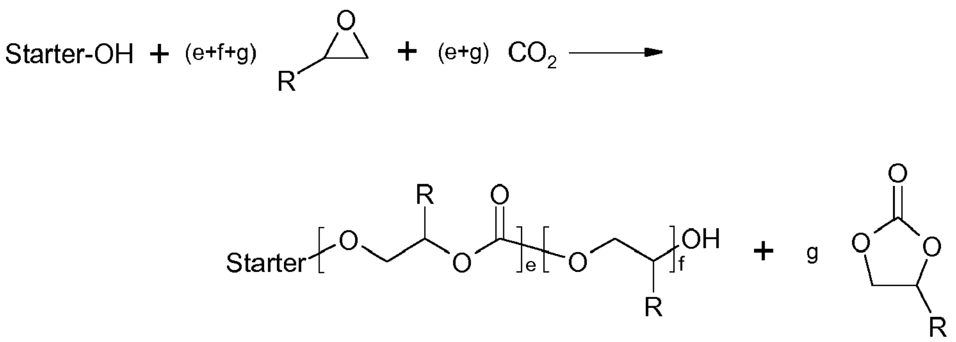

(I)

Die Herstellung von Polyurethanschaumstoffen auf Basis von Polyethercarbonatpolyolen und Isocyanaten ist bekannt (z.B. WO 2012/130760 A1, EP-A 0 222 453). Es wurde festgestellt, dass bei der Verwendung von Polyethercarbonatpolyolen zur Herstellung von Polyurethanschaumstoffen die resultierenden Produkte cyclisches Propylencarbonat enthalten, welches beispielsweise durch Emissionsmessungen am Polyurethanweichschaumstoff nachgewiesen werden kann.

Daher bestand die Aufgabe der vorliegenden Erfindung darin, ein Verfahren zur Herstellung von Polyurethanschaumstoffen bereitzustellen, welches zu Polyurethanschaumstoffen mit einer reduzierten Emission von cyclischem Propylencarbonat führt.

Überraschenderweise wurde diese Aufgabe gelöst durch ein Verfahren zur Herstellung von Polyurethanschaumstoffen, vorzugsweise von Polyurethanweichschaumstoffen, durch Umsetzung von
Komponente A enthaltend Polyethercarbonatpolyol mit einer Hydroxylzahl gemäß DIN 53240 von $\geq$ 20 mg KOH/g bis $\leq$ 120 mg KOH/g (Komponente A1),

B1 gegebenenfalls Hilfs- und Zusatzstoffe wie

a) von Komponente B2 verschiedene Katalysatoren,
b) oberflächenaktive Zusatzstoffe,
c) Additive wie Reaktionsverzögerer, Pigmente, Farbstoffe, Flammschutzmittel, Stabilisatoren gegen Alterungs- und Witterungseinflüsse, Weichmacher, fungistatisch und bakteriostatisch wirkende Substanzen, Füllstoffe und Trennmittel,

B2 mindestens ein Zinn(II)-Salz von Carbonsäuren, wobei die Carbonsäure von 10 bis 24 Kohlenstoffatome aufweist, und

C Wasser und/oder physikalischen Treibmitteln,
mit
D Di und/oder Polyisocyanaten,

wobei die Herstellung bei einer Kennzahl von ≥ 90 bis ≤ 120 erfolgt.

Bevorzugter Gegenstand der Erfindung ist ein Verfahren zur Herstellung von Polyurethanschaumstoffen, vorzugsweise von Polyurethanweichschaumstoffen, durch Umsetzung von

A1 ≥ 40 bis ≤ 100 Gew.-Teile, bevorzugt > 60 bis ≤ 100 Gew.-Teile, besonders bevorzugt bevorzugt ≥ 80 bis ≤ 100 Gew.-Teile eines oder mehrerer Polyethercarbonatpolyole mit einer Hydroxylzahl gemäß DIN 53240 von ≥ 20 mg KOH/g bis ≤ 120 mg KOH/g,
A2 ≤ 60 bis ≥ 0 Gew.-Teile, bevorzugt ≤ 40 bis > 0 Gew.-Teile, besonders bevorzugt ≤ 20 bis > 0 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 0 Gew.-Teilen, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,
A4 ≤ 40 bis ≥ 0 Gew.-Teilen, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,
B1 ggf. Hilfs- und Zusatzstoffe wie

a) von Komponente B2 verschiedene Katalysatoren,
b) oberflächenaktive Zusatzstoffe,
c) Pigmente oder Flammschutzmittel,

B2 mindestens ein Zinn(II)-Salz von Carbonsäuren, wobei die Carbonsäure von 10 bis 24 Kohlenstoffatome aufweist, und
C Wasser und/oder physikalischen Treibmitteln,
mit
D Di und/oder Polyisocyanaten,

wobei die Herstellung bei einer Kennzahl von ≥ 90 bis ≤ 120 erfolgt,
wobei alle Gewichtsteilangaben der Komponenten A1, A2, A3, A4, A5 so normiert sind, dass die Summe der Gewichtsteile A1 + A2 in der Zusammensetzung 100 ergibt.

Die Komponenten A1 bis A5 beziehen sich jeweils auf "eine oder mehrere" der genannten Verbindungen. Bei Verwendung mehrerer Verbindungen einer Komponente entspricht die Mengenangabe der Summe der Gewichtsteile der Verbindungen.

In einer besonders bevorzugten Ausführungsform enthält Komponente A

A1 ≥ 65 bis ≤ 75 Gew.-Teile, höchst bevorzugt > 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und
A2 ≤ 35 bis ≥ 25 Gew.-Teile, höchst bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

wobei die Komponente A vorzugsweise frei ist von Komponente A3 und/oder A4.

In einer anderen Ausführungsform umfasst Komponente A

A1 ≥ 65 bis ≤ 75 Gew.-Teile, bevorzugt > 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und
A2 ≤ 35 bis ≥ 25 Gew.-Teile, bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

A3 ≤ 20 bis ≥ 2 Gew.-Teile, bevorzugt ≤ 10 bis ≥ 2 Gew.-Teile, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,

wobei die Komponente A vorzugsweise frei ist von Komponente A4.

In einer weiteren Ausführungsform umfasst Komponente A

A1 ≥ 40 bis ≤ 100 Gew.-Teile, bevorzugt > 60 bis ≤ 100 Gew.-Teile, besonders bevorzugt > 80 bis ≤ 100 Gew.-Teile, höchst bevorzugt ≥ 65 bis ≤ 75 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 60 bis ≥ 0 Gew.-Teile, bevorzugt ≤ 40 bis > 0 Gew.-Teile, besonders bevorzugt ≤ 20 bis ≥ 0 Gew.-Teile, höchst bevorzugt ≤ 35 bis ≥ 25 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

A4 ≤ 40 bis ≥ 0,01 Gew.-Teile, bevorzugt ≤ 20 bis ≥ 0,01 Gew.-Teile, besonders bevorzugt ≤ 20 bis ≥ 1 Gew.-Teile, höchst bevorzugt ≤ 20 bis ≥ 2 Gew.-Teile, bezogen auf die Summe der Gew.-Teile der Komponenten A1 und A2, eines oder mehrerer Polymerpolyole, PHD-Polyole und/oder PIPA-Polyole,

A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,

wobei die Komponente A vorzugsweise frei ist von Komponente A3.

Dabei sind die angegebenen Bereiche und Vorzugsbereiche der Komponenten A1, A2, A4 und A5 miteinander frei kombinierbar.

Im Folgenden sind die im erfindungsgemäßen Verfahren eingesetzten Komponenten näher beschrieben.

<u>Komponente A1</u>

Die Komponente A1 umfasst ein Polyethercarbonatpolyol mit einer Hydroxylzahl (OH-Zahl) gemäß DIN 53240 von ≥ 20 mg KOH/g bis ≤ 120 mg KOH/g, vorzugsweise von ≥ 20 mg KOH/g bis ≤ 100 mg KOH/g, besonders bevorzugt von ≥ 25 mg KOH/g bis ≤ 90 mg KOH/g, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist. Bevorzugt umfasst Komponente A1 ein Polyethercarbonatpolyol, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 bis ≤ 4, besonders bevorzugt von ≥ 2 bis ≤ 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (II) schematisch dargestellt wird. In dem Schema gemäß Formel (II) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (II) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (II) gezeigte Polyethercarbonatpolyol beschränkt ist. In Bezug auf Formel (II) bedeutet dies, dass das Verhältnis von e/f bevorzugt von 2 : 1 bis 1 : 20, besonders bevorzugt von 1,5 : 1 bis 1 : 10 beträgt.

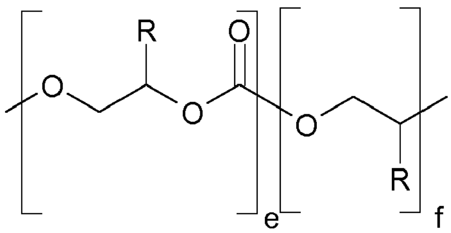

(II)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (III) berechnet,

$$LC' = \frac{[F(5{,}1-4{,}8) - F(4{,}5)] * 102}{N} * 100\% \qquad \text{(III)}$$

wobei sich der Wert für N ("Nenner" N) nach Formel (IV) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad \text{(IV)}$$

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (V) berechnet,

$$CC' = \frac{F(4{,}5) * 102}{N} * 100\% \qquad \text{(V)}$$

wobei sich der Wert für N nach Formel (IV) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert

auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).

Beispielsweise umfasst die Herstellung von Polyethercarbonatpolyolen gemäß A1, indem:

(α) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,

(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere der Alkylenoxide und Kohlendioxid zu der aus Schritt (β) resultierenden Mischung zugesetzt werden, wobei die in Schritt (β) eingesetzten Alkylenoxide gleich oder verschieden sein können von den bei Schritt (γ) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei $\geq 0$ und $\leq 90$ Gew.-%, bevorzugt bei $\geq 0$ und $\leq 50$ Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol,

2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (VI),

$$HO-(CH_2)_x-OH \qquad (VI)$$

wobei x eine Zahl von 1 bis 20, bevorzugt eine gerade Zahl von 2 bis 20 ist. Beispiele für Alkohole gemäß Formel (VI) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von ≥ 2 bis ≤ 3.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von > 10,0 und ≤ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform wird ein Polyethercarbonatpolyol A1 eingesetzt, enthaltend Blöcke gemäß Formel (II) wobei das Verhältnis e/f von 2 : 1 bis 1 : 20 beträgt.

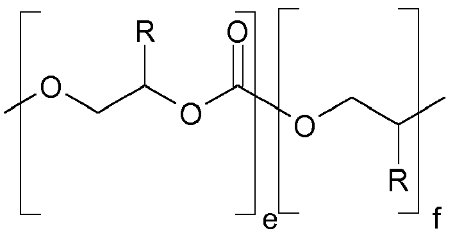

(II)

In einer weiteren Ausführungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240 von ≥ 20 mg KOH/g bis ≤ 250 mg KOH/g, vorzugsweise von ≥ 20 bis ≤ 112 mg KOH/g und besonders bevorzugt > 20 mg KOH/g bis ≤ 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein-oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen einen Gehalt von ≥ 0 bis ≤ 60 Gew.-%, vorzugsweise von ≥ 0 bis ≤ 40 Gew.-%, besonders bevorzugt ≥ 0 bis ≤ 25 Gew.-% an Ethylenoxid auf.

Komponente A3

Die Komponente A3 umfasst Polyetherpolyole mit einer Hydroxylzahl gemäß DIN 53240 ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole.

Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.

PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid.. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyether(carbonat)polyol eine Funktionalität von 2,5 bis 4 und eine Hydroxylzahl von ≥ 3 mg KOH/g bis ≤ 112 mg KOH/g (Molekulargewicht 500 bis 18000) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B1

Als Komponente B1 werden gegebenenfalls Hilfs- und Zusatzstoffe verwendet wie

a) von Komponente B2 verschiedene Katalysatoren (Aktivatoren),

b) oberflächenaktive Zusatzstoffe (Tenside), wie beispielsweise Emulgatoren und Schaumstabilisatoren (insbesondere solche mit niedriger Emission wie beispielsweise Produkte der Tegostab® LF-Serie) und Zellregler (wie beispielsweise Paraffine oder Fettalkohole oder Dimethylpolysiloxane),

c) Additive wie Reaktionsverzögerer (z.B. sauer reagierende Stoffe wie Salzsäure oder organische Säurehalogenide), Pigmente, Farbstoffe, Flammschutzmittel (wie beispielsweise Trikresylphosphat oder Ammoniumpolyphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Die Komponente B1 umfasst nicht Zinn(II)-Salze.

Als von Komponente B2 verschiedene Katalysatoren (Aktivatoren) werden vorzugsweise aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) eingesetzt. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden.

Die Komponente B1 wird in Mengen von 0 bis 10 Gew.-Teile, bevorzugt 0,1 bis 4 Gew.-Teile, bezogen auf die Summe der Gew.-Teile der Komponenten A1 bis A2, eingesetzt.

Komponente B2

Als Komponente B2 wird mindestens ein Zinn(II)-Salz von Carbonsäuren eingesetzt, wobei die jeweils zugrundeliegende Carbonsäure von 10 bis 24 Kohlenstoffatomen aufweist.

In einer bevorzugten Ausführungsform der Erfindung wird mindestens ein Zinn(II)-Salz der Formel (VII)

$$Sn(C_xH_{2x+1}COO)_2 \qquad (VII)$$

eingesetzt, wobei x eine ganze Zahl von 9 bis 23, bevorzugt 11 bis 21, besonders bevorzugt von 15 bis 19 bedeutet. Vorzugsweise ist in Formel (VII) die Alkylkette $C_xH_{2x+1}$ des Carboxylats eine verzweigte Kohlenstoffkette, d.h. $C_xH_{2x+1}$ ist eine *iso*-Alkylgruppe.

Bevorzugt werden als Zinn(II)-Salze von Carbonsäuren eine oder mehrere Verbindungen ausgewählt aus der Gruppe bestehend aus Zinn(II)-Salz der 2-Butyloctansäure, d.h. Zinn(II)-(2-butyloctoat) und Zinn(II)-Salz der Ricinolsäure, d.h. Zinn(II)-ricinoleat und Zinn(II)-Salz der 2-Hexyldecansäure, d.h. Zinn(II)-(2-hexyldecanoat) eingesetzt, besonders bevorzugt wird Zinn(II)-ricinoleat und/oder Zinn(II)-(2-hexyldecanoat), höchst bevorzugt Zinn(II)-ricinoleat eingesetzt. Die Komponente B2 wird bevorzugt in Mengen von 0,1 bis 2,0 Gew.-Teile, besonders bevorzugt von 0,1 bis 1,5 Gew.-Teile, bezogen auf die Summe der Gew.-Teile der Komponenten A1 bis A2, eingesetzt.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (X)

$$Q(NCO)_n, \qquad (X)$$

in der
n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7-8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die Isocyanat-Komponente B ein Toluylendiisocyanat-Isomerengemisch aus 55 bis 90 Gew.-% 2,4- und 10 bis 45 Gew.-% 2,6-TDI.

In einer weiteren Ausführungsform des erfindungsgemäßen Verfahrens umfasst die Isocyanat-Komponente D 100% 2,4- Toluylendiisocyanat.

In einer Ausführungsform des erfindungsgemäßen Verfahrens beträgt die Kennzahl > 90 bis ≤ 120. Vorzugsweise liegt die Kennzahl in einem Bereich von ≥ 100 bis ≤ 115, besonders bevorzugt ≥ 102 bis ≤ 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = [\text{Isocyanat-Menge eingesetzt}) : (\text{Isocyanat-Menge berechnet}) \cdot 100 \qquad (IX)$$

Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.
Die Polyurethanschaumstoffe liegen vorzugsweise als Polyurethanweichschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.
Die nach der Erfindung erhältlichen Polyurethanschaumstoffe vorzugsweise Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.
Die erfindungsgemäßen Weichschäume weisen eine Rohdichte gemäß DIN EN ISO 3386-1-98 im Bereich von $\geq$ 16 bis $\leq$ 60 kg/m$^3$, bevorzugt > 20 bis $\leq$ 50 kg/m$^3$ auf.

Beispiele

Messmethoden:

Experimentell bestimmte OH-Zahlen (Hydroxylzahl) wurden gemäß der Vorschrift der DIN 53240 ermittelt.
Experimentell bestimmte Säurezahlen wurden gemäß der Vorschrift der DIN 53402 ermittelt.

Emissionsbestimmung: cyclisches Propylencarbonat und Nebenkomponenten:

Headspace-GC und -GC/MS für cyclisches Propylencarbonat in Weichschaumproben: Eine auf ca. $\pm$ 0.3 mg gewogene Weichschaum-Probe von ca. 100 mg wird in ein 22 ml Headspace-Glasvial gegeben, mit Silicon-Septum sorgfältig verschlossen, und im vorgeheizten Ofen des Headspace-Autosamplers (PerkinElmer Turbomatrix, Seriennr. M41L0505273) 15 min bei 140°C getempert. Anschließend wird der Dampfraum bei einem Druck von 2,35 bar im Helium-Strom in den Injektor-Block des Gaschromatographen (Thermo Scientific, Trace-GC-Ultra, Seriennr. 6201252621) injiziert. Das Injektionsvolumen wird auf zwei gleiche, unpolare Säulen des Typs Rxi-5Sil MS (Restek, 20 m Länge, 0.15 mm Innendurchmesser, 2.0 $\mu$m Schichtdicke) verteilt. Die Ofentemperatur liegt für 2 min bei 45°C und wird mit 12°C / min auf 150°C und 45°C / min auf 310°C gebracht. Die eine Säule führt zum Flammionisationsdetektor (FID). Die andere endet in einem direkt gekoppelten Quadrupol-Massenspektrometer mit 70 eV Elektronenstoß-Ionisation (Thermo Scientific, ISQ-MS, Seriennr. ISQ121046). Das cyclische Propylencarbonat (CAS-Nr. 108-32-7) wird mittels FID-Response quantitativ erfasst und seine Identität durch GC/MS bestätigt.
Die vorliegende Erfindung wird anhand der nachfolgenden Beispiele erläutert, ohne jedoch darauf beschränkt zu sein. Es bedeuten:

A1-1: trifunktionelles Polyethercarbonatpolyol, OH-Zahl 56 mg KOH/g, hergestellt durch Copolymerisation von 80 Gew.-% Propylenoxid und 20 Gew.-% Kohlendioxid mit Glycerin als H-funktioneller Starterverbindung in Gegenwart eines Doppelmetallcyanid-Katalysators.

A2-1: trifunktionelles Polyetherpolyol auf Basis Glycerin mit Hydroxylzahl 48 mg KOH/g, erhalten durch Copolymerisation von 12 Gew.-% Ethylenoxid mit 88 Gew.-% Propylenoxid.

B1-1: Niax® Catalyst A-1: Handelsprodukt der Firma Momentive Performance Materials GmbH, Leverkusen, Bis[2-(N,N'-dimethylamino)ethyl] -basiert

B1-2: Tegostab® BF 2370, Handelsprodukt,Fa. Evonik Nutrition & Care GmbH, Essen

B2-1: DABCO® T-9, Handelsprodukt der Firma Air Products GmbH, Hamburg, Zinn-(2-ethylhexanoat)

B2-2: Kosmos® EF, Zinn-(II)-ricinoleatzubereitung, Fa. Evonik Nutrition & Care GmbH, Essen

C-1: Wasser

D-1: Desmodur® T 80, Mischung von 2,4'-Toluylendiisocyanat und 2,6'-Toluylendiisocyanat im Verhältnis 80/20, Covestro Deutschland AG, Leverkusen

Die in den Tabellen 1 und 2 beschriebenen Polyurethan-Weichschaumstoffe wurden mit einer industrieüblichen diskontinuierlichen Verschäumanlage ohne schwimmenden Deckel mit dem Grundriss 1 m x 1 m hergestellt. Die Höhe der Schaumstoffblöcke betrug ca. 80 cm.

Die Vermischung der Komponenten erfolgte mittels eines Rührwerks in einem Metallzylinder, der nach Zugabe des Isocyanats mechanisch aus der Schaumform entfernt wurde.

Die Stauchhärte und die Rohdichte der Schaumstoffe wurde gemäß DIN EN ISO 3386-1 bestimmt. Die Emissionsbestimmung zur Bestimmung des cyclischen Propylencarbonats wurde wie oben angegeben durchgeführt.

Ergebnisse:

Bei Verwendung eines Zinn(II)-Salzes enthaltend ein langkettige Carbonsäuresalz (Zinn(II)-ricinolat) zeigte der resultierende Weichschaumstoff (Beispiel 2) überraschenderweise eine deutlich niedrigere Emission an cyclischem Propylencarbonat als bei Verwendung eines Zinn(II)-Salzes enthaltend ein kürzerkettiges Carbonsäuresalz (Zinn(II)-2-ethylhexanoat; Vergleichsbeispiel 1).

Tabelle 1

| **Komponenten \ Beispiel** | | **1 (Vgl.)** | **2** |
|---|---|---|---|
| A1-1 | [Gew.-Tle.] | 70 | 70 |
| A2-1 | [Gew.-Tle.] | 30 | 30 |
| B1-1 | [Gew.-Tle.] | 0,12 | 0,12 |
| B1-2 | [Gew.-Tle.] | 1,0 | 1,0 |
| B2-1 | [Gew.-Tle.] | 0,18 | |
| B2-2 | [Gew.-Tle.] | - | 0,6 |
| C-1 | [Gew.-Tle.] | 4,50 | 4,50 |
| D-1 | [Gew.-Tle.] | 56,0 | 56,0 |
| | | | |
| Kennzahl | | 108 | 108 |
| Rohdichte | kg $m^{-3}$ | 21,6 | 21,5 |
| Stauchhärte 40 % Kompression | kPa | 4,46 | 3,64 |
| cycl. Propylencarbonat | [mg $m^{-3}$] | 130 | 33 |

## Patentansprüche

**1.** Verfahren zur Herstellung von Polyurethanschaumstoffen durch Umsetzung von Komponente A enthaltend Polyethercarbonatpolyol mit einer Hydroxylzahl gemäß DIN 53240 von ≥ 20 mg KOH/g bis ≤ 120 mg KOH/g (Komponente A1),

B2 mindestens ein Zinn(II)-Salz von Carbonsäuren, wobei die Carbonsäure von 10 bis 24 Kohlenstoffatome aufweist, und
C Wasser und/oder physikalischen Treibmitteln, mit
D Di und/oder Polyisocyanaten,

wobei die Herstellung bei einer Kennzahl von ≥ 90 bis ≤ 120 erfolgt.

**2.** Verfahren gemäß Anspruch 1, wobei Komponente A die folgende Zusammensetzung aufweist:

A1 ≥ 40 bis ≤ 100 Gew.-Teile eines oder mehrerer Polyethercarbonatpolyole mit einer Hydroxylzahl gemäß DIN

53240 von ≥ 20 mg KOH/g bis ≤ 120 mg KOH/g,
A2 ≤ 60 bis ≥ 0 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 0 Gew.-Teile, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,
A4 ≤ 40 bis ≥ 0 Gew.-Teile, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teile, bezogen auf die Summe der Gew.-Teile der Komponenten A1 und A2, Polyole, die nicht unter die Definition der Komponenten A1 bis A4 fallen.

wobei alle Gewichtsteilangaben der Komponenten A1, A2, A3, A4, A5 so normiert sind, dass die Summe der Gewichtsteile A1 + A2 in der Zusammensetzung 100 ergibt.

**3.** Verfahren gemäß Anspruch 1 oder 2, wobei Komponente B2 in einer Menge von 0,1 bis 2,0 Gew.-Teile (bezogen auf die Summe der Gew.-Teile der Komponenten A1 bis A2) eingesetzt wird.

**4.** Verfahren gemäß einem der Ansprüche 1 bis 3, wobei als Komponente B1

a) aliphatische tertiäre Amine, cycloaliphatische tertiäre Amine, aliphatische Aminoether, cycloaliphatische Aminoether, aliphatische Amidine, cycloaliphatische Amidine, Harnstoff und/oder Derivate des Harnstoffs,
b) oberflächenaktive Zusatzstoffe (Tenside) wie Emulgatoren, Schaumstabilisatoren, und Zellregler,
c) Additive wie Reaktionsverzögerer, Pigmente, Farbstoffe, Flammschutzmittel, Stabilisatoren gegen Alterungs- und Witterungseinflüsse, Weichmacher, fungistatisch und bakteriostatisch wirkende Substanzen, Füllstoffe und Trennmittel.

eingesetzt werden.

**5.** Verfahren gemäß einem der Ansprüche 1 bis 4, wobei als Komponente B2 mindestens ein Zinn(II)-Salz der Formel (VII)

$$Sn(C_xH_{2x+1}COO)_2 \qquad (VII)$$

Eingesetzt wird, wobei x eine ganze Zahl von 9 bis 23, bevorzugt 11 bis 21, besonders bevorzugt von 15 bis 19 bedeutet.

**6.** Verfahren gemäß Anspruch 5, wobei in Formel (VII) die Alkylkette $C_xH_{2x+1}$ des Carboxylats eine verzweigte Kohlenstoffkette, d.h. $C_xH_{2x+1}$ ist eine *iso*-Alkylgruppe ist.

**7.** Verfahren gemäß einem der Ansprüche 1 bis 4, wobei Komponente B2 eine oder mehrere Verbindungen ausgewählt aus der Gruppe bestehend aus Zinn(II)-(2-butyloctoat), Zinn(II)-ricinoleat und Zinn(II)-(2-hexyldecanoat) ist.

**8.** Verfahren gemäß einem der Ansprüche 2 bis 7, wobei Komponente A frei ist von Komponenten A3 und/oder A4.

**9.** Verfahren gemäß einem der Ansprüche 1 bis 8, wobei Komponente A umfasst:

A1 ≥ 65 bis ≤ 75 Gew.-Teile eines oder mehrerer Polyethercarbonatpolyole mit einer Hydroxylzahl gemäß DIN 53240 von ≥ 20 mg KOH/g bis ≤ 120 mg KOH/g, und
A2 ≤ 35 bis ≥ 25 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind.

**10.** Verfahren gemäß einem der Ansprüche 1 bis 9, wobei Komponente A1 ein Polyethercarbonatpolyol umfasst, welches erhältlich ist durch Copolymerisation von Kohlendioxid, einem oder mehreren Alkylenoxiden, in Gegenwart eines oder mehrerer H-funktioneller Startermoleküle.

**11.** Verfahren gemäß Anspruch 10, wobei Komponente A1 ein Polyethercarbonatpolyol umfasst, welches erhältlich ist

durch Copolymerisation von Kohlendioxid, einem oder mehreren Alkylenoxiden, in Gegenwart eines oder mehrerer H-funktioneller Startermoleküle, wobei das Polyethercarbonatpolyol einen $CO_2$-Gehalt von 15 bis 25 Gew.-% aufweist.

**12.** Verfahren gemäß einem der Ansprüche 1 bis 11, wobei in Komponente C 2,4- und/oder 2,6-TDI als Isocyanatkomponente eingesetzt wird

**13.** Polyurethanschaumstoffe, erhältlich durch ein Verfahren gemäß einem der Ansprüche 1 bis 12.

**14.** Polyurethanschaumstoffe gemäß Anspruch 13, wobei es sich um Polyurethan-Weichschaumstoffe handelt.

**15.** Verwendung der Polyurethanschaumstoffe gemäß Anspruch 13 oder 14 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

Europäisches Patentamt
European Patent Office
Office européen des brevets

# EUROPÄISCHER RECHERCHENBERICHT

Nummer der Anmeldung
EP 15 19 8730

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/058913 A1 (BASF SE [DE]; MIJOLOVIC DARIJO [DE]; BAUER STEPHAN [DE]; GOETTKE STEPH) 22. Mai 2008 (2008-05-22)<br>* Seite 1, Zeilen 5-7, 22-25 *<br>* Seite 2, Zeilen 14-21 *<br>* Seite 23, Zeilen 12-16 *<br>* Beispiele 7, 8 *<br>----- | 1-15 | INV.<br>C08G18/48<br>C08G18/76<br>C08G64/18<br>C08G64/34<br>C08G18/16<br>C08G18/18<br>C08G65/26<br>C08G18/24<br>C08G18/40<br>C08G18/44 |
| X | EP 2 910 585 A1 (BAYER MATERIALSCIENCE AG [DE]) 26. August 2015 (2015-08-26)<br>* Absätze [0001], [0008], [0009], [0066] - [0069] *<br>* Beispiel 5 *<br>----- | 1-3,5-8, 10,13 | |
| A | EP 2 256 141 A2 (BAYER MATERIALSCIENCE AG [DE]) 1. Dezember 2010 (2010-12-01)<br>* Absätze [0001], [0006], [0007], [0018] - [0022], [0030] - [0032], [0047], [0048] *<br>* Beispiele 1, 2, 5, 6, 9 *<br>----- | 1-5 | |
| | | | RECHERCHIERTE SACHGEBIETE (IPC) |
| A | WO 2015/162125 A1 (BAYER MATERIALSCIENCE AG [DE]) 29. Oktober 2015 (2015-10-29)<br>* Seite 1, Zeilen 3-5, 20-21 *<br>* Seite 3, Zeilen 4-9 *<br>* Seite 28, Zeilen 25-33 *<br>* Beispiele 27, 31 *<br>----- | 1-15 | C08G |

Der vorliegende Recherchenbericht wurde für alle Patentansprüche erstellt

1

| Recherchenort | Abschlußdatum der Recherche | Prüfer |
|---|---|---|
| München | 29. Februar 2016 | Bernhardt, Max |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 15 19 8730

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-02-2016

| Im Recherchenbericht angeführtes Patentdokument | Datum der Veröffentlichung | Mitglied(er) der Patentfamilie | Datum der Veröffentlichung |
|---|---|---|---|
| WO 2008058913 A1 | 22-05-2008 | AT 514726 T | 15-07-2011 |
| | | CN 101535364 A | 16-09-2009 |
| | | DK 2091990 T3 | 26-09-2011 |
| | | EP 2091990 A1 | 26-08-2009 |
| | | ES 2366931 T3 | 26-10-2011 |
| | | JP 5653620 B2 | 14-01-2015 |
| | | JP 2010509479 A | 25-03-2010 |
| | | KR 20090088377 A | 19-08-2009 |
| | | US 2009306239 A1 | 10-12-2009 |
| | | WO 2008058913 A1 | 22-05-2008 |
| EP 2910585 A1 | 26-08-2015 | KEINE | |
| EP 2256141 A2 | 01-12-2010 | BR PI1001629 A2 | 28-06-2011 |
| | | CA 2704918 A1 | 27-11-2010 |
| | | CN 101935383 A | 05-01-2011 |
| | | EP 2256141 A2 | 01-12-2010 |
| | | JP 5550450 B2 | 16-07-2014 |
| | | JP 2010275551 A | 09-12-2010 |
| | | PT 2256141 E | 19-11-2014 |
| | | RU 2010121180 A | 10-12-2011 |
| | | US 2010305228 A1 | 02-12-2010 |
| WO 2015162125 A1 | 29-10-2015 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130760 A1
- EP 0222453 A
- EP 1359177 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0000389 A
- EP 0176013 A
- EP 0007502 A
- EP 355000 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Kunststoff-Handbuch. Carl-Hanser-Verlag, 1993, vol. VII, 104-127
- **VON W. SIEFKEN.** Justus Liebigs Annalen der Chemie. vol. 562, 75-136
- Kunststoff-Handbuch. Carl-Hanser-Verlag, 1993, vol. VII, 139-265